# EUROPEAN PATENT APPLICATION

(11) **EP 2 913 695 A2**
(43) Date of publication of application: **02.09.2015**
(21) Application number: 15156877.1
(22) Date of filing: 27.02.2015
(51) Int. Cl.: G02B 6/38

(54) **Optical connector terminus**

(30) Priority: 28.02.2014 US 201414194045
(71) Applicant: Amphenol Corporation, Wallingford, CT 06492 (US)
(72) Inventor: Cruz, Tom N., Allen, TX 75002 (US); Woodruff, Jon M., Allen, TX 75002 (US); Jackson, Charles E., Allen, TX 75002 (US)
(74) Representative: P&TS SA (AG, Ltd.)

(57) **Abstract**

An optical terminus has a two-piece embodiment having a terminus body and a ferrule with an integral lens. The terminus has a bore that receives an optical fiber cable. The lens can also be fashioned separately and snap fit to the ferrule. The connector can also be provided as a single piece member with the lens formed integrally or separately.

## Description

### BACKGROUND OF THE INVENTION

### Field of the Invention

The present invention relates to the field of fiber optics. More particularly, the present invention relates to the facilitation of optical signals from one optical fiber to another via an expanded beam optical interface.

### Background of the Invention

In various industries, such as telecommunications, optical signals are utilized to transmit data, particularly over long distances. The optical signals are transmitted through fiber optic cables, which are designed to propagate a light signal through the cable via complete internal reflection. Optical cables are superior to copper-based cables because they are flexible and may contain numerous optical fibers. As a result, optical signals are preferred to electromagnetic signals over longer distances because features such as lower signal attenuation and larger bandwidth capacity. Additionally, optical signals are versatile and may be integrated into a sensor arrays to provide feedback for such conditions as strain, temperature, pressure, and rotation. Optical sensors may be preferred over mechanical and electric sensors because of their smaller size, lower or nonexistent power demands, and immunity to electromagnetic interference. However, one limitation of fiber optic transmissions is that the light signal must be precisely transferred from one cable to another, as any optical loss can attenuate the signal dramatically.

There are two major types of technology for fiber-optic connectors known in the art, physical contact and expanded beam. In a physical contact fiber-optic connector, two optical cables are guided against and affixed to ceramic ferrules that precisely direct the light signal from one to the other. The ferrules on each side, generally of a ceramic material, are polished precisely so that the light signal is conserved as much as possible from the source to the destination cable. An alignment retainer and axial spring can be used to ensure proper alignment. Issues that arise in a physical contact connector assembly include loss of signal due to a space between ferrules, improper alignment of the ferrules against one another, and improper alignment of the optical fiber cables.

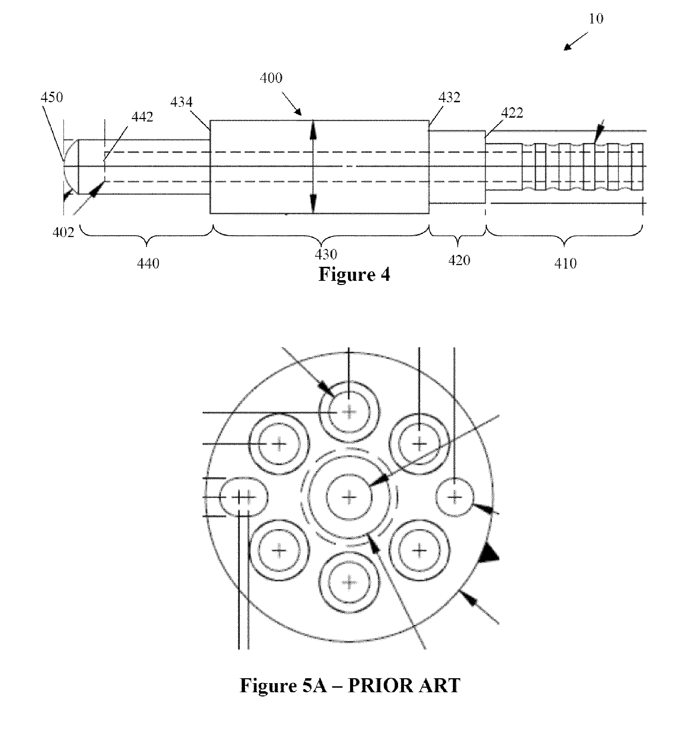

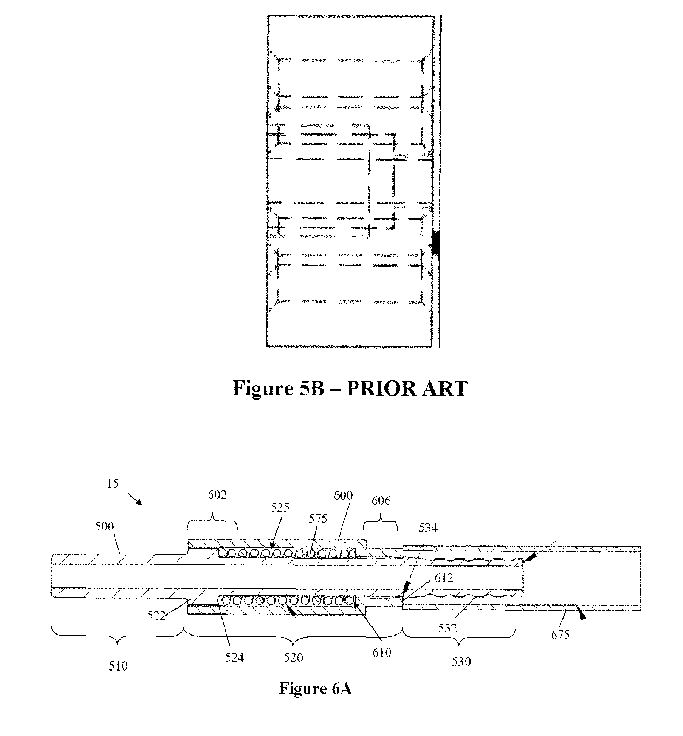

Expanded beam technology for fiber-optic connectors provides an alternative means of fiber-optic transmission. In such a connector, a ferrule guides the light signal from a source cable to a lens. The signal is then refocused by a second lens and directed to its destination. One benefit of this technology is that there is no contact requirement for the fiber optic cables. Consequently, this technology prevents mechanical wear and contamination build-up on connector components that could attenuate the light signal. However, the difficulties in ensuring proper axial alignment of the cables and the ferrules remain because alignment retainers and axial springs are still used. An alignment retainer is shown, for instance, in FIGS. 5A, B. The alignment retainer contains alignment cavities that each receive a fiber optic terminus from either end, so that the fiber optic terminus can interface in the middle of the cavity.

In all applications of fiber optics, it has become necessary to ensure that transmitted light signals will be conveyed conservatively from one optical cable to another. Even minor misalignments in the connection of optical fibers will result in high levels of signal loss. Additionally, existing optical connectors can be time-consuming in installation and disassembly. Removal of the attachment therefore can require significant time and effort. Further, existing optical connectors are limited to one form of connection, crimp ring or epoxy adhesive. In addition, because the lens used in the art is not removable, the optical connectors in existence are limited to a single fiber type, light wavelength, and focal length. There is consequently a need in the field for designing optical connectors resolving any or all of the foregoing issues. The present invention seeks to do so, by designing an expanded beam optical connector terminus that is more effective in aligning optical fibers, while maintaining operability for a variety of optical fiber types, and light signals of differing wavelengths and focal lengths.

### SUMMARY OF THE INVENTION

Accordingly, it is an object of the invention to provide a modular, inexpensive, easy to clean optical connector terminus that utilizes expanded beam technology to ensure minimal signal loss while offering ease of installation in the field. Another object of the present invention is to provide an optical connector terminus that requires no heat for its attachment to fiber optic cables. Another object of the present invention is to provide an optical connector terminus that may be used in conjunction with an alignment mechanism or retainer for signal transmission to a second receiving lensed terminus.

In accordance with these and other objects of the invention, an optical connector terminus is provided that includes a terminus body, a ferrule, and a molded lens, as three distinct parts. The terminus body is modular and designed to fit any commercially available connector cavity on a fiber optic cable. Epoxy and/or a crimp ring may be used to attach the terminus body and fiber optic cable more permanently. An inserted fiber optic cable passes through the terminus body and ferrule. The ferrule is designed to guide the connector through the connector until it contacts with the molded lens. The molded lens is modular and designed to light signals from the fiber and ensure conservative transmission to a second receiving lensed terminus over an air gap for eventual transmission to a second fiber optics cable. The molded lens can be designed to transmit the light signal of any commercially available optical fiber cable. Thus, alternate embodiments of the molded lens are capable of transmitting light signals of different wavelengths and focal lengths.

In another embodiment of the invention, an optical connector terminus is provided comprised of a terminus body and a removable, modular integrated ferrule and molded lens component. The terminus body is also modular and removable. It directs the fiber optic cable through to the integrated ferrule and molded lens. The optical fiber cable contacts with the molded lens, which directs the light signal from the fiber through and focuses or processes it for transmission to a second receiving lensed terminus.

In yet another embodiment of the invention, an optical connector terminus is provided comprised of a single integrated terminus body, ferrule, and molded lens. The terminus body portion of the integrated connector allows for the fiber optic cable pass to the ferrule, which directs it to contact with the integrated molded lens. The molded lens then focuses or processes the light signal from the cable for transmission to a second receiving lensed terminus. The integrated molded lens can be designed to transmit the light signal of any commercially available optical fiber cable. Thus, alternate embodiments of the molded lens are capable of transmitting light signals of different wavelengths and focal lengths.

These and other objects of the invention, as well as many of the intended advantages thereof, will become more readily apparent when reference is made to the following description, taken in conjunction with the accompanying drawings.

### BRIEF DESCRIPTION OF THE FIGURES

A more complete appreciation of the invention and many of the attendant advantages thereof will be readily obtained as the same becomes better understood by reference to the following detailed description when considered in connection with the accompanying drawings, wherein:
FIG. 1 shows the ferrule and molded lens of the two-piece optical connector, in accordance with an embodiment of the invention;
FIG. 2 shows the terminus body of FIG. 1;
FIG. 3A shows the ferrule body of FIG. 1;
FIG. 3B is a cross-sectional view of the terminus, ferrule and fiber optic cable of FIG. 1;
FIG. 4 is a plan view of a one-piece optical connector in accordance with an another embodiment of the invention;
FIG. 5A is a front view of an alignment retainer with alignment cavities of the prior art;
FIG. 5B is a side view of the alignment retainer of FIG. 5A;
FIGS. 6A, 6B show an alternative embodiment of the invention having a spring;
FIGS. 6C, 6D show a removable lens for use with the embodiments of FIGS 1-4 and 6A, 6B; and
FIG. 7 shows the optical connectors in an alignment retainer.

### DETAILED DESCRIPTION OF THE PREFERRED EMBODIMENTS

In describing a preferred embodiment of the invention illustrated in the drawings, specific terminology will be resorted to for the sake of clarity. However, the invention is not intended to be limited to the specific terms so selected, and it is to be understood that each specific term includes all technical equivalents that operate in similar manner to accomplish a similar purpose. Several preferred embodiments of the invention are described for illustrative purposes, it being understood that the invention may be embodied in other forms not specifically shown in the drawings.

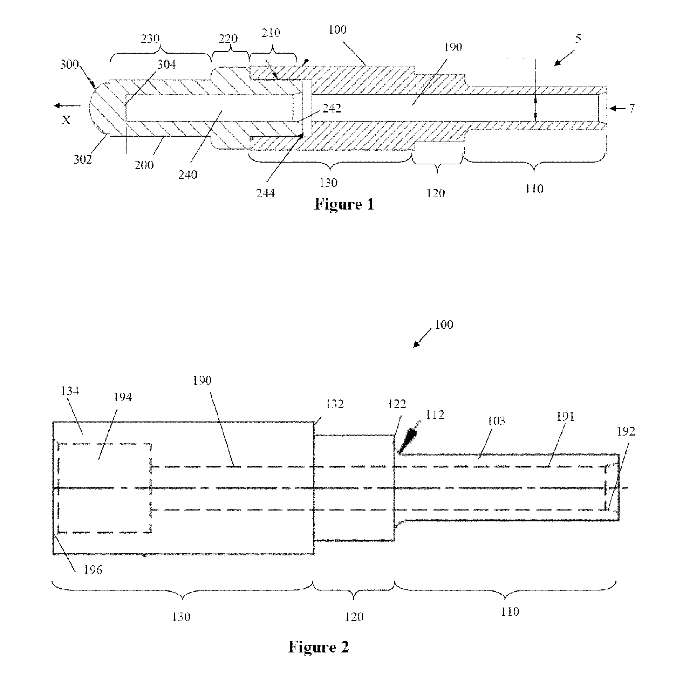

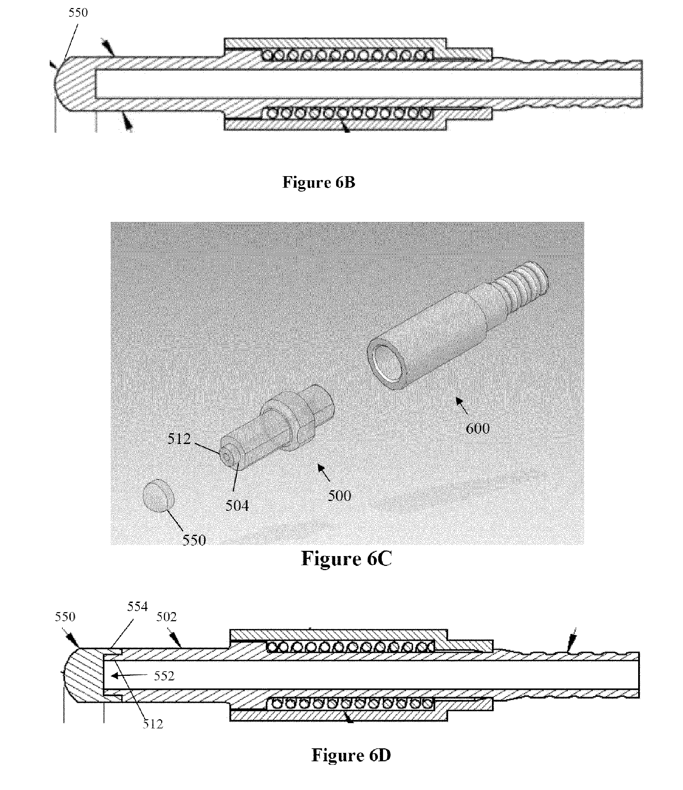

Turning to the drawings, FIGS. 1-3 show a two-piece apparatus 5 and FIG. 4 shows a one-piece optical terminus 10. Thus, FIG. 1 shows the overall implementation of the invention in accordance with a non-limiting illustrative embodiment. The optical connector terminus generally includes a terminus body 100, a ferrule 200, and a molded lens 300. As described in greater detail below, the front portion of the terminus body 100 connects with the rear portion of the ferrule 200. The rear portion of the terminus body 100 receives a commercially available fiber optic cable 7. The front portion of the ferrule 200 is integrally formed with the modular molded lens 300. The molded lens 300 focuses a light signal from the received fiber optic cable 7 so that it can be transmitted to a second receiving lensed terminus for transmission to a second commercially available fiber optic cable. The terminus body 100, the ferrule 200, and the molded lens 300 can be used to transmit signals from multiple types of optical fiber cable types with variable light wavelengths and focal lengths. It is also understood in this and alternate embodiments that the inserted fiber optic cable 7 may be comprised of multiple individual optical fibers. For instance, though the molded lens 300 is formed integral with the ferrule 200, it can also be formed as a separate piece that is connected to (such as being snapped) the front portion of the ferrule 200 (see FIG. 6C). The lens 300 can also be made of glass and adhered to the ferrule 200. Thus, all three components of the invention can be removable and modular prior to final assembly.

Turning to FIG. 2, the terminus body 100 is shown in further detail. The terminus body 100 is elongated and has a rear end portion 110, a middle portion 120 and a front end portion 130 that is opposite the rear end portion 110. The terminus body 100 forms a single integral body having a longitudinal shape with a circular cross section. The front end portion 130 has the largest outer diameter, and is configured to receive the ferrule 200. The middle portion 120 has a reduced outer diameter with respect to the front end portion 130. In this manner, the larger front end portion 130 is able to accommodate the enlarged opening 194 and also form a surface, to retain the ferrule 200. And the rear end portion 110 has a reduced outer diameter with respect to the middle portion 120 and the front end portion 130. A first shoulder 132 is formed where the front end portion 130 meets the middle portion 120. Thus, when the apparatus 5 is inserted into a connector, a clip on the connector can releasably engage the first shoulder 132 to lock the connector to the apparatus 5. And a second shoulder 122 is formed where the middle portion 120 meets the rear portion 110. The rear end portion 110 retains the cable, whereby a sleeve of the cable slides over the top surface of the rear end portion 110 and can optionally abut up against the second shoulder 122 (or even the first shoulder 132) with the top of the cable being flush with the top of the second shoulder 122 (or first shoulder 132). A curved bottom 112 is provided at the bottom of the second shoulder 122 to provide stress relief.

The rear end portion 110 of the terminus body 100 is mated to a commercially available fiber optic cable, preferably using epoxy or a crimp ring. Specifically, the distal end of the rear end portion 1100 of the terminus body 100 slides into the connector cavity, allowing the fiber optic cable 7 to enter the hollow bore 190 of the end portion of the terminus body.

A central bore 190 extends the entire length of the terminus body 100. The bore 190 extends from the rear end portion 110, through the middle portion 120, and partway into the front end 130 of the terminus body 100. The central bore 190 receives a fiber optic cable 7 and forms a terminus wall 101 having an inner surface 103 that forms the outer boundaries of the bore 190. An enlarged opening 194 is formed at the proximal end 130 of the terminus body 100. The enlarged opening 194 forms a circular wall 134 at the distal end of the front end portion 130.

The enlarged opening 194 is formed at the distal end of the front end portion 130 and receives the ferrule 200. The bore 190 has a first tapered section 192 at the far end of the rear end portion 110 of the terminus body 100. The first tapered section 192 expands outward to form a larger opening at the distal end of the rear end portion 110. The first tapered section 192 guides the optical fiber into the bore 190 and reduces stubbing. A second tapered section 196 is provided at the distal end of the front end portion 130. The second tapered section 196 expands outward at the distal end to form a larger opening at the distal end of the front end portion 130. The second tapered section 196 guides the ferrule 200 into the enlarged opening 194.

In an embodiment using epoxy-assisted mating, all components of the optics connector 5 are fabricated from polymeric material (though other material can be used), and is rigid and inflexible. In an embodiment using a crimp ring to aid in the mating of the rear end portion 110 and the optical fiber, at least the rear end portion 110 of the terminus body is fabricated from metal, and the entire terminus body 100 can be fabricated from metal.

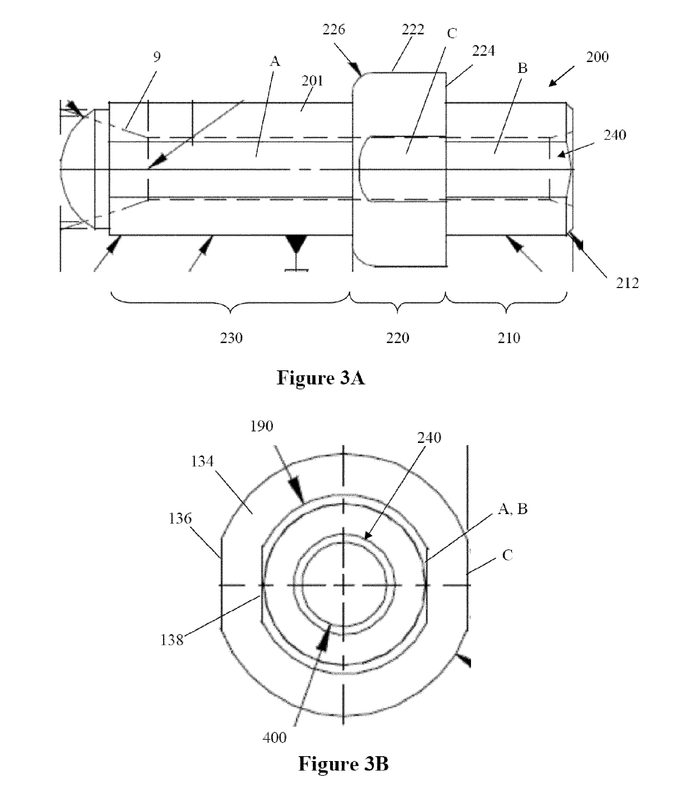

Turning to FIG. 3A, the ferrule 200 is shown in further detail. The ferrule 200 is elongated and has a circular cross section. The ferrule body 200 includes a rear end portion 210, a middle portion 220, a front end portion 230, and a molded lens 300. The rear end portion 210 has an outer distal end 212 that is tapered inward slightly. The middle portion 220 has a wider diameter and forms a stop 222 with a rear shoulder 224 and a curved front shoulder 226. The front shoulder 226 is curved to ease insertion into connector grommet. The front end portion 230 and the rear end portion 210 each have an outer diameter that is substantially the same. The front end portion 230 can be slidably received in a mating connector, such as the cavities of the alignment retainer of FIGS. SA, B, until the front shoulder 226 is reached at which point insertion is stopped. As best shown in FIG. 1, the rear end portion 210 has an open distal end, whereas the front end portion 230 has a closed distal end formed by a the rear surface of the lens 300.

As shown in FIGS. 3A and 3B, the ferrule 200 has a central bore 240 with a uniform diameter that extends the entire length of the ferrule body 200. The bore 240 forms a ferrule wall 201. As best shown in FIG. 1, the bore 240 is tapered 242 outward slightly at the distal end of the rear end portion 210 of the ferrule 200. The tapered portion 242 guides the fiber optic cable into the bore 240 without stubbing. As best shown in FIG. 3B, the outside of the ferrule body 200 and the stop member 222 can have straight portions 138, 136 respectively, at positions A, B, C, for molding purposes.

Returning to FIG. 1, the molded lens 300 is integrally formed with the front end portion 230 of the ferrule 200, so that the ferrule 200 is a one-piece element with the molded lens 300. The lens 300 has a diameter that is slightly smaller than the diameter of the front end portion 230. Accordingly, there is a lip 302 between the lens 300 and the front end portion 230. The lip 302 ensures that the lens 300 does not come into contact with an alignment retainer cavity in which the front end portion 230 can be inserted. The lip 302 further aids in the moldability of the lens surface. The lens 300 focuses the light signal 9 from the inserted fiber optic cable 7. The light is then transmitted to a second receiving lensed terminus for transmission to a second fiber optic cable. It should be understood that the inserted fiber optic cable 7 may be comprised of multiple optical fibers.

As further shown in FIG. 1, the rear portion 210 of the ferrule 200 is removably received and couples with the front portion 130 of the terminus body 100. More particularly, the rear portion 210 of the ferrule 200 is received within the enlarged opening 194, within the annular wall 134. The wall of the rear portion 210 of the ferrule 200 slides into the front end portion 130 of the terminus 100 until the leading front edge of the wall 134 contacts the shoulder 224 of the stop member 222. The rear end 210 of the ferrule 200 is shorter in length than depth of the enlarged opening 194 (and therefore also shorter than the wall 134 of the front end portion 130 of the terminus 100). Accordingly, the leading front face of the wall 134 will come into contact with the shoulder 224 of the stop member 222 and the leading front face of the rear end 210 of the ferrule 200 will not contact the bottom of the enlarged opening 194. Thus when the ferrule 200 is fully inserted into the enlarged opening 194, there is a gap or clearance area 244 between the leading front face of the rear end 210 of the ferrule 200 and the inner bottom of the enlarged opening 194. The gap 244 is created because the ferrule 200 stops when the shoulder 224 (FIG. 3A) engages the distal leading edge of the front end portion 130. The gap 244 also acts as a reservoir for excess epoxy when the rear and front are glued together. The outer diameter of the stop 220 is the same as the outer diameter of the front end portion 130 of the terminus 100.

The ferrule 200 forms a tight friction fit or a bonded fit with the terminus 100. When the ferrule 200 is received in the terminus 100, the bore 240 of the ferrule 200 is aligned with the bore 190 of the terminus. Accordingly, the fiber optic cable 7 can slide through the bore 190 of the terminus body 100, into the bore 240 of the ferrule, and to the rear surface 304 of the lens. The cable 7 comes flush with the rear face 304 of the lens 300. The ferrule bore 240 is substantially equal to the diameter of the hollow bore 190 of the terminus body 100. The ferrule bore 240 accepts the inserted fiber optic cable 7 and guides it into the proper position against the rear surface 304 of the molded lens 300. The cable 7 can be fixed to the rear surface 304 of the lens 300 by epoxy or the like. A small opening can be provided in the side of the ferrule 200 to allow excess epoxy to escape when the cable 7 is inserted into the bore 240.

In accordance with one illustrative embodiment of the invention, the rear end portion 110 has an outer diameter of about 0.067 inches. The middle portion 120 has a diameter of approximately 0.106 inches. The diameter of the hollow bore 190 of the terminus body 100 is uniform, about 0.043 inches. The enlarged opening 194 has a diameter of 0.0900 inches. The front portion 130 has an outer diameter of about 0.133 inches. The rear end portion 110 has a length of about 0.229 inches. The distal end 112 preferably has an outer diameter substantially equal to 0.067 inches. The distal end 112 preferably has a length substantially equal to 0.229 inches. The enlarged opening 194 can have a uniform diameter substantially equal to 0.090 inches. The front portion 130 of the terminus body preferably has an outer diameter substantially equal to 0.133 inches, inclusive of the outer rim that contacts the shoulder 220 of the ferrule 200.

In one embodiment of the invention, the inserted fiber optic cable 7 is at a distance substantially equal to 0.0591 inches from the outermost point of the molded lens 300 within a tolerance of ±0.0008 inches. The ferrule 200 including the molded lens 300 is transparent (*i.e.,* clear). It can be fabricated from various polymeric materials. The molded lens 300 has an anti-reflective coating, preferably with a reflective average less than 0.25% for 650 nm at a 0° angle of incidence. The molded lens 300 preferably has the following optical properties: (1) a radius of curvature substantially equal to 0.0465 inches; (2) a clear aperture substantially equal to 0.071; (3) a diameter substantially equal to 0.080 inches; (4) a scratch-dig specification substantially equal to 60-40; and (5) a surface roughness specification (RMS) that is less than 80 Å or 50 Å. The molded lens 300 focuses the light signal 9 originating from the inserted fiber optic cable 7. The light signal that exits the molded lens 300 as a beam with a width substantially equivalent to the clear aperture of the molded lens 300. The light signal is then available for transmission to a second receiving lensed terminus, which will proceed to refocus the light signal and transmit it through a second fiber optic cable.

It is noted that the apparatus 5 is a two-piece device, namely a terminus 100 and a ferrule 300, and that the molded lens 300 is shown and described as being integral with the ferrule 200. The terminus 100 and ferrule 300 can be separately molded or machined, and each form a single-piece unitary element. The two-piece design allows the terminus 100 to be interchanged to provide for different rear ends, such as either crimp or epoxy termination. It also allows the lens 300 to be replaced, and provides greater manufacturability. However, in another illustrative embodiment of the invention, the lens 300 can be a separate piece that is removably received at the front end 230 of the ferrule 200. For instance, the lens 300 can snap into place, so that the molded lens 300 is removable and modular. Still yet, the lens 300 can be bonded to the ferrule 200. In these manners, the assembly 5 can fit a variety of commercially available optical fiber cables, and permutations of molded lenses 300 capable of transmitting light signals of different wavelengths and focal lengths.

Turning now to FIG. 4, another non-limiting illustrative embodiment of the invention is shown. Here, the entire apparatus 10 is comprised of a single integrated unitary terminus body 400. The entire optics connector terminus 400 is preferably fabricated out of optically clear polymeric material. The terminus body 400 includes a crimp portion 410, rear end portion 420, middle portion 430 and front end portion 440. The crimp portion 410 attaches the apparatus 400 by crimp ring or epoxy to the outer jacket and strength member of a commercially available fiber optic cable. The rear end portion 420 has a diameter that is larger than the diameter of the crimp portion 410 and forms a shoulder 422 between the rear end portion 420 and the crimp portion 410. The middle portion 430 has a diameter that is larger than the diameter of the rear end portion 420 and forms a shoulder 432 between the middle portion 430 and the rear end portion 420. The front end portion 440 has a diameter that is smaller than the diameter of the middle portion 430, such that a shoulder 434 is formed between the middle portion 430 and the front end portion 440. One or more of the shoulders 422, 432, 434 can be used as a stop mechanism to prevent the terminus body 400 from being inserted too far in a receiving alignment device. A lens 450 front surface is formed along with the front of the lens rear surface 442.

A bore 402 of uniform diameter extends the entire length of the body 400, up to the lens rear surface 442. An optical fiber is received in the bore 402 and passes the entire length of the body 400 to the rear side 442 of the lens 450. The optical fiber transmits light through the lens 450 refracting surface, which focuses the light. The cable can also be fixed to the rear lens surface 442 by epoxy or the like. A small opening can be provided in the side of the front end portion 440 to allow excess epoxy to escape when the cable is inserted into the bore 402.

As shown, the cable portion 410 can be comprised of ribs that facilitate in gripping the inserted optical fiber cable 7. The first gap in the ribs preferably appears a distance substantially equal to 0.026 inches from the outermost point of rear end portion 420. Four more gaps subsequently appear every additional 0.035 inches. Each gap's indentation is preferably substantially equal to 0.003 inches. Each gap has a width substantially equal to 0.019 inches. The inserted fiber optic cable 7 is threaded into the rear end portion 420 and through the entire length of the hollow bore 402. The hollow bore 402 is uniform in diameter and extends longitudinally through the entire length of the rear end portion 420, middle portion 430 and partway through the front end portion 440. The hollow bore 402 terminates at the rear lens surface 442, which is substantially equal to 0.0590 inches from the outermost point of the molded lens 450. The diameter of the hollow bore 402 is uniform, preferably substantially equal to 0.042 inches.

Thus, the embodiment of FIG. 3 provides a single integrated connector body 400. It will be appreciated that the lens 450 can be fashioned as a separate device that is attached to the front end portion 440, such as being snap fit or by bonding. The lens 450 can have the same properties as in the earlier embodiments. The body 400 can also be made of the same materials as the earlier embodiments, and can be transparent optically (*i.e.,* clear) at the wavelengths of interest. As in earlier embodiments, the size of the bore and the dimensions of the terminus can be adjusted to receive different size fiber optic cables. In addition, while the invention has been described as having a circular cross section and bore, other shapes can be provided.

Turning to FIGS. 6A-D, another illustrative non-limiting embodiment of the fiber optic apparatus 15 is shown. Here, the apparatus 15 includes a ferrule having a ferrule body 500 and a terminus having a terminus body 600. The ferrule body 500 is an elongated single-piece member with a circular cross-section. The ferrule body 500 has a front end portion 510 and a rear end portion 530 and an intermediate or middle portion 520 therebetween. The middle portion 520 includes an outward projection 522 that forms a lip 524 that forms a front stop. Though the projection 522 is shown at the middle portion 520, it can be provided at any suitable position, such as at the front portion 510. The rear end portion 530 has an outer surface with one or more raised ridges 532. The further inward ridge 532 has a lip 534. An optical cable can be engaged to the rear end portion 530 by a clamp 675 that is crimped to the ridges 532 of the rear end portion 530.

The terminus body 600 is an elongated hollow tube having a circular cross-section and a central bore. The diameter of the terminus body 600 is larger than the diameter of the ferrule body 500, so that the terminus body 600 extends over at least the middle portion 520 of the ferrule body 500. The terminus body 600 is slightly larger than the projection 522, so that the projection 522 forms a snug fit with the terminus body 600 at a front end 604 of the terminus body 600. The rear end 606 of the terminus body 600 has a smaller diameter to form a lip 610 that operates as a rear stop. The smaller rear end portion 606 is slightly larger than the ferrule body 500 to form a snug fit with the ferrule body 500. Accordingly, a circular channel 525 is formed between the outer surface of the ferrule body 500 and the inner surface of the terminus body 600. The channel 525 is closed at its front end by the outward projection 522 of the ferrule 500, and at its rear end by the inward rear end portion 606. In addition, the distal rear end of the rear end portion 606 is tapered inward slightly to form a lip 612. The terminus lip 612 is configured to engage with the ridge lip 534.

A spring 575 is positioned in the channel 525 about the ferrule body 500. The spring 575 engages the front stop 524 of the projection 522 and the rear stop 610 of the rear end portion 606, which cooperate to prevent the spring 575 from escaping the channel 525. The apparatus 15 is assembled by placing the spring 575 about the middle portion 520 of the ferrule body 500, so it rests on the front stop 524. The ferrule 500 is then slidably received in the terminus 600. The ferrule 500 is pushed all the way through the terminus 600 against the force of the spring 575 until the rear end portion 530 of the ferrule 500 emerges out from the rear end portion 606 of the terminus body 600. The ferrule 500 is then released, and the spring pushes outward on the ferrule 500 against the front and rear stops 524, 610. The ferrule 500 will come to rest when the ridge lip 534 engages the terminus rear lip 612. The cable can then be crimped to the rear end portion 530 of the ferrule 500. The ferrule 500 is then slidably engaged with the terminus 600 against the force of the spring 575. Accordingly, the ferrule 500 can be moved in/out of the terminus 600 by pushing inward on the ferrule 500. The spring 575 holds the terminus in a fixed position and prevents axial movement.

As shown in FIG. 6B, a lens 550 is provided at the distal front end of the front end portion 510. The lens 550 is integrally formed with the ferrule 500 so that the ferrule 500 and lens 550 is a single-piece member. Thus, the entire apparatus 15 has two pieces: the ferrule 500 with the lens 550, and the terminus 600. Referring to FIGS. 6C, 6D, the lens 550 can instead be fashioned as a separate piece that is connected to the body 502 of the ferrule 500. As shown, the lens 550 can have a small central bore 552 that forms a small circular opening and a circumferential wall 554. And, a circular projection or plug 512 can be formed at the distal front end of the ferrule 500 that has a reduced diameter with respect to the ferrule body 502. The lens 550 can then be friction fit to the ferrule 500 by pushing the plug 512 into the bore 552. The lens 550 can come into contact with the forward-facing surface 504 of the ferrule body 502.

Thus, the apparatus 15 has three pieces: the ferrule 500, the lens 550, and the terminus 600. In this manner, different lenses 550 having different optical properties (such as focal distance or filtering) can be fitted to the ferrule 500. The removable lens 550 can be used in the earlier embodiments of FIGS. 1-4 (see FIG. 6C) as well as in the spring embodiments of FIGS. 6A-B (FIG. D). In addition, any suitable connection can be made between the lens 550 and the ferrule 500. For instance, the lens 550 can be adhered to the ferrule and need not have a plug and bore configuration.

Thus, the present invention allows for quick field installation through the use of Ultra Violet (UV) light-curing epoxy. It has a finite conjugate expanded beam that comes to focus and collimates when heated and can work over a large temperature range. In yet another embodiment of the invention, UV-transparent plastic allows UV-light to cure adhesives in addition to heat curable adhesives in the center bore.

The terminus of the present invention can operate over a wide temperature range, from at least -55° to 100° C. To compensate for thermally induced mechanical focus shift due to material expansion / contraction and change in the refractive index over temperature, the design has a thermally dependent varying focus. The lens focal length varies over temperature while transmitting light between mated lens pairs within clear aperture and the angular acceptance range (numerical aperture) of the receiving fiber. The focus of the lens changes over temperature from a foxed focal point to a collimating beam as the temperature changes from -55° to 100° C. The terminus lens can have convex refractive or diffractive optical elements.

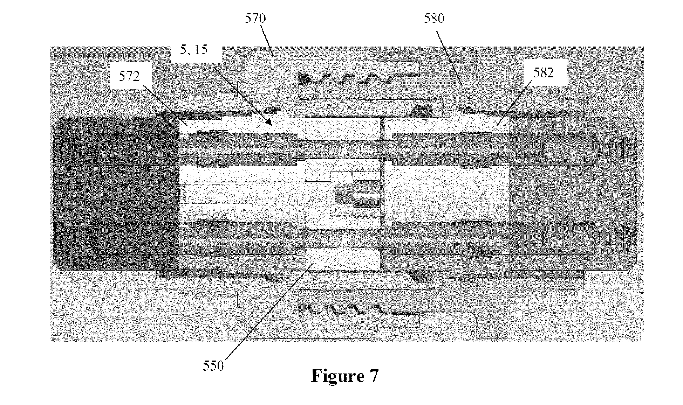

One non-limiting illustrative use of the two-piece optical apparatus 5 and/or one-piece optical terminus 15 of the present invention is shown in FIG. 7. As shown, a connector is providing having a first mating connector 570 and a second mating connector 580. An adapter 572, 582 is provided in each connector 570, 580, respectively. Each of the adapters 572, 582 have a first bore that receives a first terminus 5, 15, and a second bore that receives a second terminus 5, 15. At least the distal ends of the ferrules 200 project out of the adapters 572, 582 and are slidably received by a central alignment retainer 550. The first termini 5, 15 of each adapter 572, 582 are received in a first bore of the retainer 550 so that they face each other, and the second two termini 5, 15 are received in a second bore to face each other. Accordingly, light passes out of the lens 300 of one of the termini 5, 15 in each bore, and into the lens 300 of the termini 5, 15 facing it in that bore. Accordingly, when the first and second connectors 570, 580 are brought together, the first and second termini 5, 15 are aligned with to be in optical communication with the respective termini 5, 15 in the other connector 570, 580. Of course, it will be apparent that the termini 5, 15 can be utilized in other connectors and configurations, and need not be in the connector of FIG. 7.

The foregoing description and drawings should be considered as illustrative only of the principles of the invention. The invention may be configured in a variety of shapes and sizes and is not intended to be limited by the preferred embodiment. Numerous applications of the invention will readily occur to those skilled in the art. Therefore, it is not desired to limit the invention to the specific examples disclosed or the exact construction and operation shown and described. Rather, all suitable modifications and equivalents may be resorted to, falling within the scope of the invention.

## Claims

1. An optical terminus connector comprising:
an elongated terminus body having a central bore extending an entire length of said terminus body, a rear end portion configured to couple with a fiber optic cable, and a front end portion with an enlarged opening;
an elongated ferrule having a central bore, a rear end portion having an open end, and a front end portion having a closed end, wherein said rear end portion of said ferrule is configured to be removably received in the enlarged opening of said terminus body, and wherein the central bore of said ferrule extends through the rear end portion and the front end portion to the closed end; and
a lens at the closed end of said ferrule.

2. The terminus of claim 1, wherein the terminus body, the ferrule, and the lens are each discrete, modular components.

3. The terminus of claim 1 or 2, wherein the ferrule and the lens are formed of a single integrated piece and the terminus body is formed as a discrete component.

4. The terminus of one of claims 1 to 3, wherein the rear end portion of said ferrule has a tapered opening about the central bore at the open end.

5. The terminus of one of claims 1 to 4, wherein said lens is anti-reflective.

6. The terminus of one of claims 1 to 5, wherein the rear end portion of said terminus body is slidably received in the enlarged opening.

7. The terminus of one of claims 1 to 6, wherein the rear end portion of said terminus body is configured to couple into a cavity of a connector.

8. The terminus of one of claims 1 to 7, wherein the central bore of said terminus body and the central bore of said ferrule receives a fiber optic cable.

9. The terminus of claim 8, wherein said lens focuses a light signal from the fiber optic cable.

10. An optical terminus comprising:
a body having a central bore extending through the body, a rear end portion configured to couple with a fiber optic cable, an elongated front end portion configured to be slidably received in an opening of a mating connector, a middle portion larger than the front end portion and having a shoulder that stops the front end portion from being further slidably received in the opening; and
a lens at the front of said front end portion.

11. The optical terminus of claim 10, wherein said lens and said body are a single unitary piece.

12. The optical terminus of claim 10, wherein said body is a single unitary piece.

13. The optical terminus of claim 12, wherein said lens is a separate piece that is coupled with said body.
